# EUROPÄISCHE PATENTSCHRIFT

(11) **EP 2 890 517 B1**
(45) Veröffentlichungstag und Bekanntmachung des Hinweises auf die Patenterteilung: **13.03.2019**
(21) Anmeldenummer: 13762418.5
(22) Anmeldetag: 22.08.2013
(51) Int. Cl.: B23K 10/02, H01L 31/05

(54) **VERFAHREN UND VORRICHTUNG ZUM VERBINDEN VON LEITERN MIT SUBSTRATEN**
METHOD AND DEVICE FOR BONDING CONDUCTORS TO A SUBSTRATE
MÉTHODE ET DISPOSITIF DE LIAISON DE CONDUCTEURS À UN SUBSTRAT

(30) Priorität: 28.08.2012 DE 102012107896
(43) Veröffentlichungstag der Anmeldung: 08.07.2015
(73) Patentinhaber: Maschinenfabrik Reinhausen GmbH, 93059 Regensburg (DE)
(72) Erfinder: SHIRINOV, Elshad, 93049 Regensburg (DE)
(74) Vertreter: Reichert & Lindner Partnerschaft Patentanwälte
(86) Internationale Anmeldenummer: PCT/EP2013/067478
(87) Internationale Veröffentlichungsnummer: WO 2014/033047

(56) Entgegenhaltungen:
- DE-A1-102010 013 850
- US-A1- 2002 056 473

## Beschreibung

Die Erfindung betrifft ein Verfahren zum Verbinden von Leitern mit Substraten.

Ferner betrifft die Erfindung eine Vorrichtung zum Verbinden von Leitern mit Substraten. Eine Positioniereinheit positioniert einen Leiter in einem zu verbindendem Abschnitt auf oder nahe dem Substrat. In mindestens einer Plasmaquelle wird ein Plasma erzeugt. Mindestens eine Zuleitung dient zum Zuführen von einem Verbindungsmaterial in das Plasma der Plasmaquelle.

Des Weiteren können mehrere erfindungsgemäße Vorrichtungen in einem System integriert werden, welches zur parallelen Bearbeitung eines oder mehrerer Substrate ausgelegt ist.

Zum Verbinden von Metallwerkstücken kommen in der industriellen Fertigung, wie z.B. der Automobil-, Schiff-, Flugzeugindustrie verschiedene thermische Fügeverfahren zum Einsatz. Bekannte Fügeverfahren umfassen Metallschutzgas-Löten (MSG-Löten), Laser-Löten, Induktionslöten, Plasmalöten, Plasma-Pulver-Löten oder Plasma-Pulver-Auftragslöten. Bei diesen Lötverfahren wird zumeist ein Verbindungsmaterial in Pulver-, Fülldraht- oder Drahtform aufgeschmolzen. Das aufgeschmolzene Verbindungsmaterial kann eine metallurgische Lötverbindung mit den Metallwerkstücken durch Diffusion, Schweißung der Grenzflächen eingehen und sie so verbinden. Beim Lötprozess müssen die Metallwerkstücke nicht oder nur teilweise aufgeschmolzen werden.

Beim Plasma-Pulver-Auftraglöten wird z.B. ein Metallpulver aus hartstoffverstärkten Al-Basismaterial auf einem Al-Basisgrundwerkstoff angebracht, um die Verschleißbeständigkeit der Substratoberfläche zu erhöhen. Bekannt sind auch thermische Spritzverfahren, wie Plasmaspritzen unter Einsatz von Pulvern in Atmosphäre oder im Vakuum, Flammspritzen unter Einsatz von Drähten oder Pulvern, Lichtbogenspritzen mit dem Draht oder Fülldraht, Hochgeschwindigkeitsflammspritzen mit dem Pulver.

Die deutsche Patentschrift DE 100 19 095 B4 offenbart ein Verfahren zum thermischen Fügen von Teilen aus Metall durch Plasma-Pulver-Löten. Aus dem Plasmabrenner wird ein Plasmastrahl auf die zu fügenden Teile aus Metall gerichtet. Plasmabrenner und die zu fügenden Teile aus Metall sind relativ zueinander bezüglich einer Richtung verfahrbar. Über im Plasmabrenner integrierte Pulverauslässe wird ferner ein in einem Fördergas getragener Pulverstrom auf den Auftreffbereich des Plasmastrahls auf den zu fügenden Teilen gerichtet, wo das Pulver vom Plasma geschmolzen wird. Insbesondere kann das Pulver ein Metallpulver mit Zusätzen von Flussmittel sein. Zusätzlich kann über im Plasmabrenner integrierte, die Pulverauslässe umliegende Auslässe ein Inertgas ausströmen, so dass der Lötprozess in einen Schutzgasmantel geführt werden kann.

Die deutsche Offenlegungsschrift DE 10 2007 042 082 A1 offenbart eine Lötvorrichtung zum Löten von Solarzellen. Sie weist eine Laserlöteinrichtung auf, die entlang einer Oberfläche einer zu lötenden Solarzelle verfahrbar ist. Die Vorrichtung beinhaltet eine Niederhaltereinrichtung zum Niederhalten eines Lotbandes auf der Solarzelle. Das Lotband besteht vorzugsweise aus einem lotbeschichteten Kupferstreifen. Die Niederhaltereinrichtung ist benachbart zum Laserlötelement und in Lötrichtung vorne angeordnet. Sie wird zusammen mit dem Laserlötelement mit konstantem Abstand über der Solarzelle verfahren. Bevorzugt erfolgt das Niederhalten des Lotbandes ebenfalls berührungslos über eine Luftdüse. Hierzu kann heiße Pressluft verwendet werden, die zusätzlich Solarzelle und Leiter vor dem Laser-Lötprozess vorwärmen kann. Alternativ kann die Niederhaltereinrichtung auch als höhenverstellbare Rolle ausgebildet sein.

Die europäische Patentanmeldung EP 1 748 495 A1 offenbart Verfahren und eine Vorrichtung zum Herstellen eines Solarzellenstring aus mehreren aneinander gereihten, mit Lötbändern elektrisch in Reihe geschalteten und mechanisch verbundenen Solarzellen, insbesondere Siliziumzellen. Die Lötbänder sind an den Solarzellen zugewandten Flächen mit Lötzinn überzogen. Jeweils ein Ende jedes Lotbandes ist abwechselnd auf die Oberseite und auf die Unterseite zweier benachbarter Solarzellen gelegt. Die so vorbereitete Solarzellenanordnung wird über eine oder mehrere Vorheizzonen geführt und vermittels Induktionslöten zu einem Solarzellenstring verlötet. Ein Induktor kann gleichzeitig als bewegbarer Niederhalter fungieren. Die Solarzellen werden von einem Förderband schrittweise und getaktet unter dem Induktor verfahren, wobei typische Taktzeiten bei 6 bis 7 Sekunden liegen.

Die deutsche Offenlegungsschrift DE 10 2008 046 330 A1 offenbart Verfahren zur elektrischen Kontaktierung von Kontaktdrähten an einer Seite einer Solarzelle durch Laser- oder Induktionslöten. Vorzugsweise ist der Kontaktdraht ein verzinnter Kupferflachdraht. Zu kontaktierende Solarzellen weisen mindestens einen metallischen streifenförmigen Bereich (Busbar) auf. Auf diesen wird ein Kontaktdraht aufgelötet, wobei die Lötdauer bzw. die Dauer des Energieeintrags an den Lötbereich 300 ms oder mehr beträgt. Ferner kann der Lötbereich mit Luft gekühlt werden. Dies erlaubt eine Senkung der Temperatur im Lötbereich während des Lötprozesses bis auf 100°C bis 120°C.

Die deutsche Offenlegungsschrift DE 10 2009 000 262 A1 offenbart thermisches Fügeverfahren zum Herstellen einer stoffschlüssigen Verbindung zwischen wenigstens zwei Flächen eines oder mehrerer Werkstücke mittels wenigstens einer Fügenaht. Dabei werden Zusatzwerkstoff verwendet, die bereits vor dem Fügen auf wenigstens ein Werkstück aufgebracht werden. Die Schweißenergie wird über eine Schweißdüse oder -kopf mittels eines Laser-, Elektronen-, Plasmastrahls oder eines Lichtbogens erbracht. Die Schweißdüse kann relativ zum Werkstück entlang einer Richtung verfahren werden, wobei das Werkstück und/oder die Schweißdüse beweglich sein können.

Die deutsche Offenlegungsschrift DE 199 52 043 A1 offenbart Verfahren zum Metallschutzgas-Löten (MSG-Löten) von metallischen Werkstoffen unter Verwendung von Lotwerkstoffen und eines elektrischen Lichtbogens mit abschmelzender oder mit nichtabschmelzender Elektrode. Der Lötprozess findet in einer Schutzgasatmosphäre statt. Das Schutzgas enthält eine oder mehrere inerte Gaskomponenten. Neben Inertgasen kann das Schutzgas Aktivgaskomponenten wie Sauerstoff oder Kohlendioxid enthalten.

Die deutsche Offenlegungsschrift DE 10 2008 011 249 A1 offenbart verschiedene Lithographieverfahren zur Plasmabeschichtung von Musterstrukturen auf Substratoberflächen. Zunächst wird eine Negativmaske der gewünschten Struktur auf der Substratoberfläche aufgebracht. Anschließend werden Substratoberfläche und Negativmaske mittels Plasma vollflächig beschichtet. Nach einem Lift-off-Prozess der beschichteten Negativmaske verbleibt die auf dem Substrat verbleibende Beschichtung innerhalb der Konturen des gewünschten Musters.

Die internationale Patentanmeldung WO 2011/120714 A2 offenbart Solarzellen sowie Verfahren und Vorrichtungen zur ihrer Herstellung. Dabei wird wenigstens ein Leiter mechanisch und elektrisch leitend mit der Solarzelle und/oder weiteren Leitern durch einen leitfähigen Überzug verbunden. Leiter können die Funktion von Sammel- oder Busbarleiter einer Solarzelle ausfüllen. Der leitfähige Überzug wird aus einer Lösung elektrolytisch oder galvanisch abgeschieden oder durch Plasmasprühen abgeschieden.

Die deutsche Offenlegungsschrift DE 10 2010 013 850 A1 offenbart ein Verfahren zum elektrischen Verbinden von Solarzellen für ein Solarmodul. Hierbei befindet sich wenigstens ein Kontaktanschluss auf der Solarzelle. Zwischen dem Kontaktanschluss wird ein elektrisches Leitungsmaterial angeordnet. Zum Verbinden des Kontaktanschlusses mit dem elektrischen Leitungsmaterial wird in lokalen Bereichen mittels eines Niedertemperatur-Plasmaspritzverfahrens ein Kontaktmaterial zwischen dem Kontaktanschluss und dem elektrischen Leitungsmaterial abgeschieden. Hierbei wird eine haftende elektrische Verbindung zwischen dem Leitungsmaterial und dem jeweiligen Kontaktanschluss ausgebildet.

Die US-amerikanische Patentanmeldung US 2002/0056473 A1 offenbart ein Verfahren zur Ausbildung und Verbindung von Leiterbahnen auf Solarzellen. Hierbei werden mittels eines thermischen Spritzverfahrens metallische Partikel auf einer Solarzelle abgeschieden. Das thermische Spritzverfahren kann ein Plasmaspritzverfahren sein.

Der Erfindung liegt die Aufgabe zugrunde, ein schnelles, kosteneffizientes, flexibel anwendbares, schonendes und einfaches Verfahren zur Herstellung von langzeitstabilen Verbindungen von Leitern bzw. Leiterbahnen auf Substraten bzw. deren Verbindung mit elektrischen Kontakten zu schaffen.

Diese Aufgabe wird gelöst durch ein Verfahren, das die Merkmale des Anspruchs 1 umfasst.

Ferner liegt der Erfindung die Aufgabe zugrunde, eine flexibel anwendbare Vorrichtung zur schnellen, kosteneffizienten, einfachen, und schonenden Herstellung von langzeitstabilen Verbindungen von Leitern bzw. Leiterbahnen auf Substraten bzw. deren Verbindung mit elektrischen Kontakten zu schaffen.

Diese Aufgabe wird gelöst durch eine Vorrichtung, die die Merkmale des Anspruchs 8 umfasst.

Das erfindungsgemäße Verfahren kann verschiedenartige Leiter und Substrate miteinander stoffschlüssig verbinden. Es eignet sich für die Bearbeitung von Substraten verschiedenster Form und Oberflächenbeschaffenheit, die aus elektrisch leitenden, halbleitenden oder isolierenden Materialien bestehen oder zusammengesetzt sind. In einem Verfahrensschritt wird ein Leiter durch eine Positioniereinheit in einem zu verbindendem Abschnitt auf einem Substrat positioniert. Die Positioniereinheit positioniert den Leiter im zu verbindenden Abschnitt auf oder in geringem Abstand über dem Substrat. Ferner wird ein Plasma in mindestens einer Plasmaquelle erzeugt und ein Verbindungsmaterial in das Plasma zugeführt. Die Zuführung des Verbindungsmaterials kann innerhalb der Plasmaquelle erfolgen. Dabei wird zumindest teilweise die Beschaffenheit des Verbindungsmaterials geändert. Unter der Änderung der Beschaffenheit ist eine zumindest teilweise Änderung der physikalischen Eigenschaften und/oder chemische Beschaffenheit des Verbindungsmaterials zu verstehen. Eine derartige Aktivierung des Verbindungsmaterials kann vollständig oder teilweise, z.B. nur an den Oberflächen der Bestandteile des Verbindungsmaterials, erfolgen, indem vorzugsweise der Massenstrom des Verbindungsmaterials in die Plasmaquelle mit dem durch das Plasma getragenen Wärmestrom abgestimmt wird. Der Plasmastrahl und darin enthaltenes aktiviertes Verbindungsmaterial wird durch je mindestens eine Düse aus der mindestens einen Plasmaquelle auf den zu verbindenden Abschnitt gerichtet ausgeleitet. Somit wird aktiviertes Verbindungsmaterial auf dem zu verbindendem Abschnitt abgeschieden. Das aktivierte Verbindungsmaterial bildet eine Ablagerung, welche Leiter und Substrat stoffschlüssig verbindet.

Die Positioniereinheit kann zusätzlich zur Zuführung des Leiters ausgebildet sein. Der Leiter kann zum Beispiel ein metallischer Draht mit oder ohne Beschichtung aus Oxidationsschutz oder Lot sowie mit in Hohlräumen eingeschlossenen Flussmitteln sein. Die Positioniereinheit kann eine Drahtwickelspule sein, über die der Leiter kontinuierlich zur Verfügung gestellt wird.

Eine Relativbewegung wird zwischen dem zu verbindenden Abschnitt entlang eines Verbindungspfades auf dem Substrat und der mindestens einen Plasmaquelle ausgeführt. In verschiedenen Ausführungsformen der Relativbewegung können entweder Substrat oder Plasmaquelle und Positioniereinheit ortsfest sein.

Vorzugsweise werden die mindestens eine Plasmaquelle und die Positioniereinheit in einem konstanten Abstand und mit derselben Vorschubgeschwindigkeit entlang des Verbindungspfades verfahren. Ebenso ist eine Relativbewegung zwischen Plasmaquelle und Positioniereinheit vorzusehen, so dass zusätzliche Ablagerungen auch abseits des Verbindungspfades ausgebildet werden können.

Das Verbindungsmaterial, welches einer Plasmaquelle zugeführt wird, kann aus mehreren Materialkomponenten zusammengesetzt sein. Die Materialkomponenten und deren Mischungsverhältnis in der Ablagerung können entlang des Verbindungspfades variiert werden. Desgleichen können die Schichtdicke und die Schichtbreite entlang des Verbindungspfades variiert werden.

Gemäß einer Ausführungsform kann der Plasmaquelle mindestens eine weitere Plasmaquelle entlang des Verbindungspfades in einer Vorschubrichtung nachgeordnet sein. Mit der weiteren Plasmaquelle kann auf der Ablagerung eine weitere Ablagerung aus einem demselben oder einem andersartigen Verbindungsmaterial aufgetragen werden. Abstand und Vorschubgeschwindigkeit können so gewählt sein, dass die Ablagerung vor dem Abscheiden der weiteren Ablagerung bereits erstarrt ist. Die weitere Ablagerung wird zumindest teilflächig auf der Ablagerung abgeschieden.

Erfindungsgemäß wird mit einer Wärmesenke der Leiter gekühlt. Oft sind der Wärmeausdehnungskoeffizient und die Wärmekapazität des Leiters höher als die des Substrats oder des Verbindungsmaterials. Solche Unterschiede in der Wärmeausdehnung können zu mechanischen Verspannungen und Rissen in der Ablagerung aus Verbindungsmaterial führen. Die Erfindung sieht daher vor, den Leiter gegenüber dem Substrat oder dem Verbindungsmaterial zumindest teilweise selektiv zu kühlen. Dadurch wird der Unterschied in der wärmeinduzierten Ausdehnung des Leiters im zu verbindenden Abschnitt an die des Substrates und des Verbindungsmaterials angeglichen und zumindest teilweise kompensiert.

Über die Positioniereinheit wird eine Druckkraft auf den Leiter ausgeübt, so dass dieser gegen das Substrat gedrückt wird. Zusätzlich kann eine Zugkraft auf den Leiter in Richtung der Vorschubrichtung eingestellt werden. Die von der Positioniereinheit ausgeübten Kräfte vermeiden, dass der erhitze Abschnitt des Leiters sich vom Substrat aufwölbt und dass Bindungsfehler wie z.B. wie Hohlräume oder Delaminationen, in der Ablagerung aus Verbindungsmaterial entstehen.

Ferner kann beim Substrat und/oder beim Leiter im zu verbindendem Abschnitt durch den Plasmastrahl eine physikalische und/oder chemische Aktivierung vorgenommen werden. Beispielsweise können Verschmutzungen oder Oxidschichten entfernt werden, es kann die Oberflächenbeschaffenheit von Leiter und Substrat zur besseren Benetzbarkeit mit Verbindungsmaterial verändert werden. Zusätzlich kann mindestens eine der mindestens einen Plasmaquelle in Vorschubrichtung vorgeordnete weitere Plasmaquelle eine Plasmabehandlung von Leiter und/oder Substrat durchführen.

Weiterhin kann das Verbindungsmaterial Materialkomponenten aus mindestens einem Pulvertyp umfassen oder vollständig pulverförmig sein. Ein solches Verbindungsmaterial kann erfindungsgemäß mit einem Trägergas oder einer Trägerflüssigkeit durchmischt werden. Die Mischung aus Trägergas oder Trägerflüssigkeit und dem Verbindungsmaterial kann zudem vor Einleitung in die Plasmaquelle einer Homogenisierung unterzogen werden. Beispielsweise kann dies durch eine Ultraschallquelle, einen piezoelektrischen Aktuator oder einen Pulverdüse bewirkt werden. Vorzugsweise sind das Trägergas und/oder ein in die Plasmaquelle eingeleitetes Plasmagas Inertgase, wie z.B. Argon oder Stickstoff. Die Inertgasatmosphäre verhindert die Oxidation der aktivierten Oberflächen von Verbindungsmaterial, Leiter und Substrat im Plasmastrahl. Außerdem können geringe Massenanteile von reduzierend wirkenden Gasen wie Wasserstoff oder Kohlenstoffoxide zugesetzt werden.

Die Erfindung betrifft ferner eine Vorrichtung zum Verbinden von Leiter mit Substraten. Die Vorrichtung umfasst eine Positioniereinheit zur Positionierung eines Leiters zumindest in einem Teil eines zu verbindenden Abschnitts des Substrats. Des Weiteren umfasst die Vorrichtung mindestens eine Plasmaquelle zur Erzeugung eines Plasmas. Durch mindestens eine Zuleitung kann dem Plasma der Plasmaquelle ein Verbindungsmaterial zugeführt werden. Der pulverförmige Bestandteil des Verbindungsmaterials wird als Pulver in Gebinden bereitgestellt. Wie bereits beschrieben wird das Pulver mit dem Trägergas oder der Trägerflüssigkeit gemischt, so dass man das Verbindungsmaterial erhält, das der Plasmaquelle mit der erforderlichen Fließfähigkeit zugeführt werden kann. An der Plasmaquelle ist mindestens eine Düse ausgebildet, durch die ein Plasmastrahl mit darin enthaltenem aktivierten Verbindungsmaterial auf den zu verbindenden Abschnitt gerichtet ist. Besonders vorteilhaft zur Abscheidung mehrerer formstrukturierter Ablagerungen ist es, die Öffnung der Düse mit einem Shutter zu versehen. Eine sich ausbildende Ablagerung verbindet den Leiter und das Substrat stoffschlüssig.

Zusätzlich kann die erfindungsgemäße Vorrichtung mindestens ein Verstellsystem umfassen. Das Verstellsystem ist zum Erzeugen einer dreidimensionalen Relativbewegung des Substrats gegen die mindestens eine Plasmaquelle und die Positioniereinheit entlang eines Verbindungspfades ausgebildet.

Das Verstellsystem kann verschiedene Verstelleinrichtungen umfassen. Eine erste Verstelleinrichtung ist dem Substrathalter zugeordnet. Je eine zweite Verstelleinrichtung ist jeweils mit mindestens einer der Plasmaquellen verbunden. Eine dritte Verstelleinrichtung ist mit der Positioniereinheit verbunden. Die Verstelleinrichtungen sind zur Ausführung von beliebigen Translationen und Kippbewegungen bezüglich der X-Koordinatenrichtung, Y-Koordinatenrichtung und/oder Z-Koordinatenrichtung ausgelegt.

Eine weitere Ausführungsform der erfindungsgemäßen Vorrichtung sieht vor, dass jede der mindestens einen Plasmaquelle mindestens eine Zuleitung zur Zufuhr von Verbindungsmaterial in das Plasma aufweist.

Jede Zuleitung kann ferner eine Dosiereinheit umfassen. Eine erfindungsgemäße Dosiereinheit ist zur abstimmbaren Dosierung eines Trägergases und jeweils mindestens einer Materialkomponente des Verbindungsmaterials ausgelegt. Abhängig vom Einsatzgebiet der erfindungsgemäßen Vorrichtung können die Dosiereinheiten zur Förderung und Dosierung von z.B. Drähten, pulverförmigen oder granularen Festkörpern, Flüssigkeiten oder Gasen ausgelegt sein. Insbesondere ermöglicht sie, die Zufuhr einer Materialkomponente ganz zu unterbinden sowie gewünschte Mischungsverhältnisse zweier Materialkomponenten einzustellen.

Erfindungsgemäß weist die Vorrichtung zumindest eine Wärmesenke auf, welche dem Leiter am zu verbindenden Abschnitt oder an der Positioniereinheit zugeordnet ist. Bevorzugt werden bei dieser Ausführungsform der erfindungsgemäßen Vorrichtung Leiter mit hoher Wärmeleitfähigkeit verwendet. Dadurch kann die Wärmesenke den Leiter vorzugsweise außerhalb des Plasmastrahls thermisch kontaktieren. Der vom Leiter getragene Wärmestrom in die Wärmesenke bewirkt eine effektive Kühlung im zu verbindenden Abschnitt.

Der mindestens einen Plasmaquelle kann zudem in Vorschubrichtung mindestens eine weitere Plasmaquelle vor- und/oder nachgeordnet sein. Eine vorgeordnete Plasmaquelle dient beispielsweise einer möglichst vollflächigen Plasmavorbehandlung von Abschnitten der zu verbindenden Leiter und/oder Substrate. Ebenso kann entlang des Verbindungspfades eine zusätzliche Ablagerung auf dem Substrat aufgebracht werden, auf welche anschließend der Leiter positioniert und erfindungsgemäß verbunden werden. Eine nachgeordnete Plasmaquelle dient beispielsweise der Abscheidung aus einem anderen Winkel als die Abscheidung aus der mindestens einen Plasmaquelle.

Des Weiteren können mehrere erfindungsgemäße Vorrichtungen in einem System integriert werden, welches zur parallelen Bearbeitung eines oder mehrerer Substrate ausgelegt ist. Insbesondere erlaubt ein solches System, Leiter mit jeweils zwei oder mehr Substraten in einem Verfahrensschritt stoffschlüssig verbinden. Durch Abscheiden einer Ablagerung aus z.B. leitfähigem Verbindungsmaterial können die Substrate oder Kontaktstellen so elektrisch miteinander verbunden werden.

Die Breite der Ablagerung orthogonal zur Vorschubrichtung ist neben der Ausgestaltung der Düse durch ihren Abstand zum Substrat einstellbar. In die Einstellung der Schichtdicke der Ablagerung gehen erfindungsgemäß zusätzlich die Massenströme der Komponenten des Verbindungsmaterials und des Plasmagases sowie die Vorschubgeschwindigkeit ein. Typische Breiten der Ablagerung liegen beispielsweise bei 1 mm bis 5,5 mm. Das Verfahren kann jedoch auch zur großflächigen Beschichtung eingesetzt werden. Auch geringere Breiten der Ablagerung sind durch das erfindungsgemäße Verfahren erzielbar, insbesondere durch Kombination mit Lithographieverfahren.

Ein besonderer Vorteil der Erfindung liegt darin, dass die von der Mischung aus Plasma und aktiviertem Verbindungsmaterial eingetragene Wärmemenge auf Substrat und Leiter gegenüber gängigen Lötverfahren reduziert werden kann. Dieser Wärmeeintrag kann durch Modulieren der Plasmaeigenschaften, den Abstand von Düse zum Substrat, Erhöhung der Vorschubgeschwindigkeit und/oder zusätzliche Kühlung eingestellt werden. Wird beispielsweise die Vorschubgeschwindigkeit so gewählt, dass die Dauer des Plasma-Pulver-Beschichtungsprozesses in einem zu verbindenden Abschnitt von ca. 1,0 x 3,5-5,5 mm² weniger als 20 ms beträgt, dann liegt dort die Temperatur typischerweise im Bereich von ca. 70-150°C. Zum einen können dadurch thermisch sensible Substrate wie Solarzellen, Papier, Lebensmittel, Polymerfolien oder Kunststoppen (wie Thermoplasten, PA, PMMA, PPS, PBA, Nylon, ABS etc.) verarbeitet werden. Zum anderen können Substrate, Leiter, Verbindungsmaterialien oder Verbundmaterialien mit unterschiedlichen Wärmeausdehnungskoeffizienten verarbeitet werden, weil der im Vergleich zu Verfahren, wie z.B. dem Kontaktlöten, der geringere Wärmeeintrag den Unterschied der Wärmeausdehnung von Substraten, Leitern und Ablagerung von Verbindungsmaterial reduziert. Dadurch können Verspannung oder Rissbildung in der Ablagerung vermieden werden. Ferner erfolgt erfindungsgemäß der Wärmeeintrag nur lokal um einen begrenzten Bereich um den zu verbindenden Abschnitt. Dies erlaubt die parallele Ausführung des erfindungsgemäßen Verfahrens an mehreren benachbarten Abschnitten eines Substrats ohne Überschreitung eines gegebenen Schwellwertes für seine Gesamterwärmung.

Die Materialkomponenten können elektrisch leitfähig (z.B. Metallpulver, Graphit, Fullerene, wie z.B. carbon nanotubes, oder sonstige leitfähige anorganische Verbindungen, wie z.B. Salze oder organische Verbindungen wie DNA oder lebensmitteltaugliche Sacharide oder Farbstoffe) oder elektrisch isolierend (z.B. Gläser wie Quarz, undotiertes Silizium, Siliziumnitrid, Keramik oder Polymere etc.) oder halbleitend (z.B. dotiertes Silizium oder Galliumarsenid etc.) sein. Ferner können die Materialkomponenten aus Legierungen oder Mischungen bestehen. Metallische Materialkomponenten umfassen erfindungsgemäß Weichlote (z.B. Zinn, Silber, Zinn-Silber oder deren Legierungen) und Hartlote (z.B. Zink, Aluminium, Nickel, Kupfer oder deren Legierungen), die oft kostengünstiger als die genannten Weichlote sind und gute Benetzungseigenschaften aufweisen. Ferner können Materialkomponenten Flussmittel zur Erhöhung der Fließfähigkeit metallischer Materialkomponenten oder Reduktionsmittel zur chemischen Aktivierung der zu verbindenden Oberflächen von Substraten, Leitern und/oder Verbindungsmaterialien sein. Des Weiteren können die vorgenannten Materialkomponenten in Füllstoffen dispergiert oder in flüssigen Lösungsmitteln gelöst sein. Die Materialkomponenten des Verbindungsmaterials können teilweise gasförmig entweichen und werden somit nur teilweise Bestandteil der Ablagerung. Insbesondere kann erfindungsgemäß über eine geeignete Wahl des Mischverhältnisses der Materialkomponenten der Wärmeausdehnungskoeffizient der Ablagerung aus Verbindungsmaterial dem Wärmeausdehnungskoeffizienten von Substraten oder Leitern angepasst werden.

Je feinkörniger die pulverförmigen Materialkomponenten des Verbindungsmaterials in Pulverform sind, desto größer ist ihre Gesamtoberfläche im Verhältnis zu ihrem Volumen, und desto kälter kann der Plasmastrahl sein, der das Verbindungsmaterial an- oder aufschmilzt. Verglichen mit herkömmlichen Spritzverfahren können dadurch Ablagerungen mit geringer Porosität hergestellt werden, wobei ein geringer Wärmeeintrag in das Substrat resultiert. Die maximale Zugfestigkeit und Leitfähigkeit von elektrischem Strom und/oder Wärme kann durch den Querschnitt der Ablagerung und der Wahl des Verbindungsmaterials beeinflusst werden. Je nach verwendeten Werkstoffen werden ausreichende Haftfestigkeiten der Ablagerung auf dem Substrat bereits mit Schichtdicken von ca. 10-500 µm erreicht.

Zusätzlich kann die Düse als Diffusor zur besseren Durchmischung und Homogenisierung sowie zur Einstellung des Diffusionsgrades des Aerosols aus Plasma und aktiviertem Verbindungsmaterial ausgebildet sein.

Ein Anwendungsgebiet für die Erfindung ist die Herstellung von Solarzellenmodulen. Beispielhaft werden im Folgenden die Herstellung von Solarzellenmodulen und dabei die technologischen Probleme beschrieben, welche von der Erfindung überwunden werden können.

Mehrere Solarzellen werden durch einen oder mehrere Leiterdrähte zu Solarzellenmodulen verbunden. Eine einfache Reihe von verbundenen Solarzellenmodulen wird oft Solarzellen-String genannt. Aus Kostengründen werden die Komponenten von Solarzellen immer materialeffizienter gestaltet. Zum Beispiel sind die halbleitenden Wafer einer Solarzelle typischerweise nur 180 µm dünn. Entsprechendes gilt für die Leiterdrähte. Damit sinken tendenziell die mechanische Stabilität und der maximal durchleitbare elektrische Strom einer Solarzelle. Zur Strombegrenzung empfiehlt es sich, die Solarzellen elektrisch in Reihe zu schalten. Die Leiterdrähte der photoelektrisch aktiven Seite (der Sonnenseite) einer Solarzelle werden mit der Schattenseite einer benachbarten Solarzelle verbunden. Die Schattenseite ist üblicherweise teil- oder vollflächig metallisiert, z.B. mit einer stark Aluminium-haltigen Siebdruckpaste. Die Sonnenseite trägt eine Vielzahl von Leiterfingern, die als Kollektoren von durch den Photoeffekt getrennten Ladungsträger fungieren. Da diese Leiterfinger lichtabschattend wirken, wird ihre Gesamtfläche zur Wirkungsgradsteigerung der Solarzelle möglichst minimiert. Gängige Verbindungsverfahren umfassen z.B. Induktions- bzw. Laser-Löten oder Galvanikverfahren. Sowohl Schatten- wie auch Sonnenseite sind typischerweise bezüglich der Wahl des Lotmaterials nur eingeschränkt verlötbar. Insbesondere ist die Werkstoffauswahl von Verbindungsmaterialien z.B. auf bei Solarzellen gängigen AI-Siebdruck- oder Al-PVD-Schichten beschränkt. In einem dem Verlöten von Kontaktdrähten auf Sonnen- bzw. Schattenseite vorgelagerten Prozessschritt werden deshalb üblicherweise zusätzliche "Busbars" aus gut lötbaren und elektrisch leitfähigen Materialen (wie z.B. Ag, Sn oder deren Legierungen) auf die Solarzelle metallisiert. Die Busbars wirken als elektrisch leitfähige Haftvermittlungsschicht zwischen Leiter und den Oberflächenmaterialien der Solarzelle. Zwar erfüllen Weichlote auf Zinnbasis im Allgemeinen diese Anforderung, jedoch weisen ihre Lotschichten auf bestimmten Substraten ungenügende Haftzugfestigkeiten auf.

Für die elektrische Verbindung der Solarzellen mit einem Solarmodul kommen üblicherweise so genannte Stringer-Lötautomaten zum Einsatz. Beim Löten mit Stringer-Lötautomaten werden die Solarzellen z.B. vorgewärmt und der Kontaktdraht mittels Heizstempeln auf die Busbars auf der Solarzelle gelötet. Alternativ kann mittels einer Laser-Lötapparatur ein Leiterdraht kontaktfrei an metallisierten Busbars aufgelötet werden. Oft wird dabei der Kontaktdraht nicht über seine gesamte Kontaktfläche zur Solarzelle sondern nur über eine geeignete Anzahl von Lötpunkten verbunden. Beim Laser-Löten kann im Vergleich zu Kontaktlötverfahren die Energieeinbringung auf das Substrat reduziert werden. Zusätzlich kann der Überhitzung der Solarzelle z.B. durch Luftkühlung entgegengewirkt werden. Bei zu hoher thermischer Belastung der Solarzelle können Bindungsfehler wie Mikrorisse in der Lötverbindung oder mechanische Verspannungen der Solarzelle entstehen. Die Aufbringung von Busbars und Leiterdrähten auf die Solarzelle in zwei getrennten Verfahrensschritten ist technisch und apparativ aufwendig und erhöht die Prozesskosten. Insbesondere erfordert eine solche getrennte Verfahrensführung einen zusätzlichen und potentiell fehlerbehafteten Repositionierungsschritt von Leiterdraht mit Busbar.

Zur Herstellung einer gut haftenden Lötverbindung sowie zur Reduzierung der infolge der unterschiedlichen Ausdehnungskoeffizienten entstehenden Eigenspannungen der benachbarten Bindungsmaterialen wird die Solarzelle beim Lötprozess auf eine bestimmte Temperatur vorgewärmt. Dann wird der Kontaktdraht auf metallisierte Busbar aufgelötet. Eine Vorwärmung kann je nach Temperatur und Dauer der thermischen Belastung und Abkühlbedingungen die Solarzelle bzw. die Lötverbindung schädigen. Zur Optimierung der Lötverbindung werden bevorzugt Flachdrähte aus Kupfer mit volumenbezogen großer Auflagefläche an Busbars auf der Solarzelle aufgelötet. Das Aspektverhältnis von Dicke zu Breite des Flachdrahtes beträgt typischerweise 1:10 bis 1:20. Zur Verbesserung der Lötbarkeit wird der Kontaktdraht aus Kupfer verzinnt. Dies verursacht zusätzliche Prozess- bzw. Materialkosten.

Nachfolgend sind erfindungsgemäße Ausführungsformen der Vorrichtung und des Verfahrens zum Verbinden von Leitern mit Substraten anhand der beigefügten Zeichnungen näher beschrieben. Diese beispielhaft konkretisierten Ausführungsformen sind nicht als Einschränkungen für den Umfang der Erfindung zu werten.

Es zeigen:
**Figur 1** eine schematische Schnittansicht einer Ausführungsform der erfindungsgemäßen Vorrichtung;
**Figur 2** eine schematische Schnittansicht der in Figur 1 gezeigten Ausführungsform der erfindungsgemäßen Vorrichtung mit einem Verstellsystem;
**Figur 3** eine schematische Schnittansicht der in Figur 1 gezeigten Ausführungsform der erfindungsgemäßen Vorrichtung mit Dosiereinheiten;
**Figur 4** eine schematische Seitenansicht der Zuordnung einer Plasmaquelle zum zu verbindenden Leiter und dem Substrat;
**Figur 5** eine schematische Seitenansicht einer weiteren Möglichkeit der Zuordnung einer Plasmaquelle zum zu verbindenden Leiter und dem Substrat;
**Figur 6** eine schematische Seitenansicht der Zuordnung von zwei Plasmaquellen zum zu verbindenden Leiter und dem Substrat;
**Figur 7** eine schematische Seitenansicht einer weiteren Möglichkeit der Zuordnung von zwei Plasmaquellen zum zu verbindenden Leiter und dem Substrat;
**Figur 8** eine schematische Ansicht der Zuordnung von zwei Plasmaquellen zum zu verbindenden Leiter und dem Substrat, wobei die Vorschubrichtung aus der Zeichenebene zeigt;
**Figur 9A bis 9F** verschiedene Querschnittsformen von Leitern, die mittels der Ablagerung stoffschlüssig mit dem Substrat verbunden sind;
**Figur 10A bis 10D** Querschnittsprofile von verschiedenen Typen der Ablagerung und der Verbindung von Leiter und Substrat;
**Figur 11A und 11B** Querschnittansichten verschiedener Topologien des Substrats und der resultierenden Verbindung von Leiter und Substrat;
**Figur 12** eine schematische Draufsicht auf eine erfindungsgemäß hergestellte Verbindung zwischen Substrat und Leiter mit zusätzlichen Ablagerungen;
**Figur 13** eine schematische Draufsicht auf erfindungsgemäß hergestellte und stoffschlüssige Verbindungen zwischen Substrat und Leiter;
**Figur 14** eine schematische Ansicht einer Ausführungsform der erfindungsgemäßen Vorrichtung mit einer Ausgestaltung der Positioniereinheit für den Leiter;
**Figur 15** eine Detailansicht der in Figur 14 gezeigten Positioniereinheit; und
**Figur 16A-16E** schematische Darstellungen des Produktionsprozesses eines Solarzellenmoduls.

In den Zeichnungen werden für gleiche oder gleich wirkende Elemente der Erfindung identische Bezugszeichen verwendet. Der Übersichtlichkeit halber sind in den Zeichnungen nur Elemente und Bezugszeichen wiederholt aufgeführt, die für die dargestellten Aspekte der jeweiligen erfindungsgemäßen Ausführungsform relevant sind.

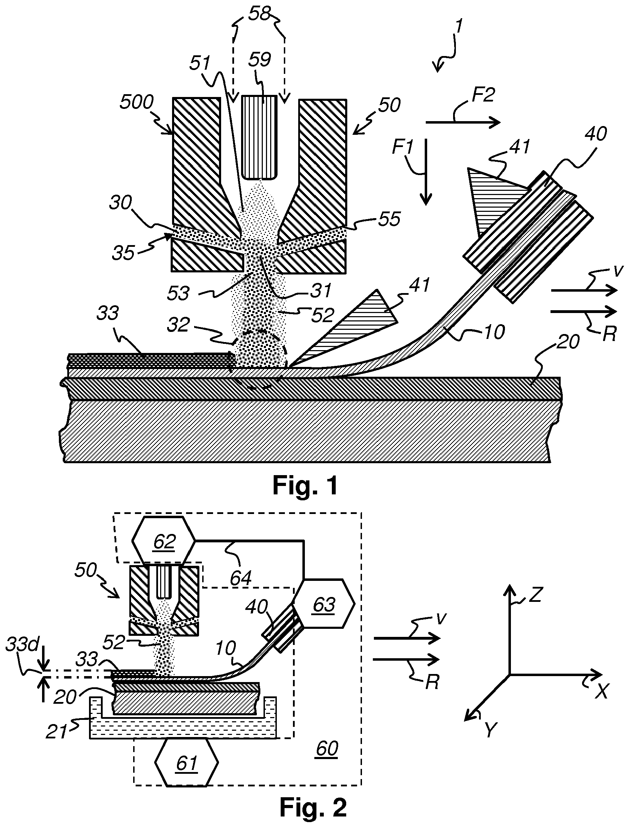

**Figur 1** zeigt eine schematische Schnittansicht einer Ausführungsform der erfindungsgemäßen Vorrichtung 1. Der Schnitt ist parallel zur Vorschubrichtung R und zur Vorschubgeschwindigkeit v gesetzt. In einer Plasmaquelle 50 wird ein Plasmagas 58 eingeführt und zu einem Plasma 51 gezündet. Beispielsweise kann die Plasmafizierung des Prozessgases 58 mit elektrischer Energie aus einer Spannungsquelle (nicht gezeigt) erzeugt werden. Insbesondere kann eine gepulste oder kontinuierliche Gleich- oder Wechselspannung an einer Elektrode 59 gegen das Gehäuse 500 der Plasmaquelle 50 angelegt werden. Neben einstellbaren Parametern wie der angelegten Spannung, dem Massenstrom und der Zusammensetzung des Plasmagases 58 werden die Eigenschaften des Plasmas 51 auch durch die Geometrie der Plasmaquelle 50 bestimmt. Über mindestens eine Zuleitung 55 wird ein Verbindungsmaterial 30 in das Plasma 51 eingeleitet. Im hier dargestellten Ausführungsbeispiel ist das Verbindungsmaterial 30 zumindest teilweise pulverförmig. Durch das Plasma 51 werden die physikalischen Eigenschaften und/oder chemischen Eigenschaften des Verbindungsmaterials 30 verändert. Somit erfolgt zumindest eine teilweise Änderung der Beschaffenheit der Pulverteilchen des Verbindungsmaterials 30. Eine Möglichkeit ist, dass der Aggregatszustand, die rheologische und/oder chemische Beschaffenheit der Pulverteilchen des Verbindungsmaterials 30 aktiviert werden. Das Trägergas 35, in dem das pulverförmige Verbindungsmaterial 30 untergemischt oder dispergiert ist, erhöht seine Fließfähigkeit. Zur Vermeidung der Verklumpungsgefahr von Pulverteilchen kann zusätzlich eine Homogenisierung der Mischung des Verbindungsmaterials 30 mit dem Trägergas 35 vorgesehen sein.

Ferner können die Zuleitungen 55 für das Verbindungsmaterial 30 Heizelemente (nicht dargestellt) zum Vorwärmen des Verbindungsmaterials 30 aufweisen. Dadurch kann die mittlere Enthalpie des Plasmas 51 zur Erzielung der angestrebten Aggregatszustandsänderung des Verbindungsmaterials 30 reduziert werden. Durch eine Düse 53 wird ein Plasmastrahl 52 und darin enthaltenes aktiviertes Verbindungsmaterial 31 aus der Plasmaquelle 50 ausgeleitet und auf einen zu verbindenden Abschnitt 32 gerichtet. Im zu verbindenden Abschnitt 32 sind ein Substrat 20 und ein mit dem Substrat 20 zu verbindender Leiter 10 angeordnet. Aus dem im Plasmastrahl 52 enthaltenen und aktivierten Verbindungsmaterial 31 wird im zu verbindenden Abschnitt 32 eine Ablagerung 33 abgeschieden, welche den Leiter 10 und das Substrat 20 stoffschlüssig verbindet. Der Leiter 10 wird durch eine Positioniereinheit 40 im zu verbindendem Abschnitt 32 positioniert. Die Positioniereinheit 40 kann beispielsweise rohrförmig ausgestaltet sein. Die rohrförmige Positioniereinheit 40 ist nicht mit dem Substrat 20 in Kontakt. Aus der rohrförmigen Positioniereinheit 40 wird der drahtförmige Leiter 10 zugeführt und dessen Eigenspannung genutzt, um ihn mit einer einstellbaren Druckkraft F1 gegen das Substrat 20 zu drücken. Ferner kann die Positioniereinheit 40 den drahtförmigen Leiter 50 mit einer Zugkraft F2 spannen. Wenn der Leiter 10 im zu erhitzenden Abschnitt 32 unter Erhitzung durch den Plasmastrahl 52 eine höhere Wärmeausdehnung erfährt, kann eine solche Zugspannung ein Aufwölben des erhitzten Abschnitts des Leiters 10 vom Substrat 20 und folglich Bindungsfehler in der Ablagerung 33 vermeiden.

Nach Erkalten der Ablagerung 33 kann sich der Leiter 10 jedoch entsprechend stärker zusammenziehen als das Substrat 20. Dies kann zu mechanischen Verspannungen und Verformungen des Substrats 20 und zu Bindungsfehlern wie Mikrorissen in der Ablagerung 33 führen. Abhilfe schafft zum einen die Reduktion des Wärmeeintrags durch das Plasma 51. Zum andern wird der Leiter 10 insbesondere selektiv durch mindestens eine Wärmesenke 41 gekühlt, um seine vom Substrat 20 verschiedene Wärmeausdehnung zumindest teilweise zu kompensieren. Eine Wärmesenke 41 kann z.B. direkt am zu verbindenden Abschnitt 32 oder über die Positioniereinheit 40 thermisch leitfähig an den Leiter 10 angekoppelt werden. Eine Wärmesenke 41 kann beispielsweise als Kühlgasstrom ausgebildet sein, der auf einen Abschnitt des Leiters 10 zwischen dem Plasmastrahl 52 und der Positioniereinheit 40 gerichtet ist. Alternativ kann eine Wärmesenke 41 als wärmeleitfähiger Schleifkontakt ausgebildet sein, der thermisch an eine Wärmesenke 41 angekoppelt ist. Insbesondere kann die Wärmesenke 41 in die Positioniereinheit 40 integriert sein. Eine solche Wärmesenke 41 kann beispielsweise ein kühlwasserdurchflossener Kupferblock oder ein regelbares Peltier-Element sein.

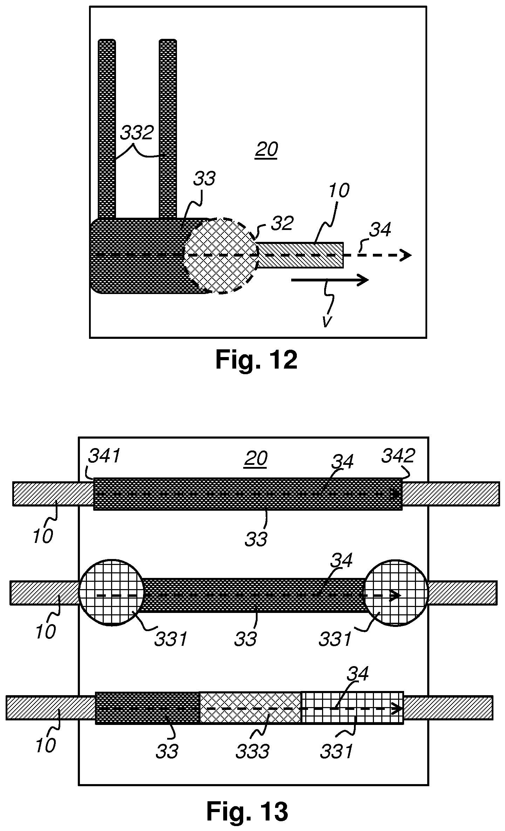

**Figur 2** zeigt eine schematische Schnittansicht der in Figur 1 gezeigten Ausführungsform der erfindungsgemäßen Vorrichtung 1 mit einem Verstellsystem 60. Das Verstellsystem 60 ist zum Erzeugen einer dreidimensionalen Relativbewegung des Substrats 20 gegenüber der mindestens einen Plasmaquelle 50 und der Positioniereinheit 40 entlang eines Verbindungspfades 34 (siehe Figur 12) ausgebildet. Entlang des Verbindungspfades 34 wird der zu verbindende Abschnitt 32 geführt und eine Ablagerung 33 abgeschieden. Sein Verlauf kann einer beliebigen Trajektorie auf einem oder mehreren Substraten 20 folgen. Dementsprechend kann die Orientierung von Vorschubrichtung R und Vorschubgeschwindigkeit v entlang des Verbindungspfades 34 (siehe Figur 12) variieren. Die Ablagerung 33 kann auf dem Verbindungspfad 34 durchgängig oder auch stückweise abgeschieden werden. Durch Einstellen der Vorschubgeschwindigkeit v kann das Verstellsystem 60 z.B. die Verbindungszeit pro Fläche eines zu verbindenden Abschnitts 32, die Dicke 33d der Ablagerung 33 und den Wärmeeintrag auf Substrat 20 und Leiter 10 durch den Plasmastrahl 52 beeinflussen.

Durch geeignete Anpassung der Geometrie der Düse 53 kann die Form (insbesondere die Aufweitung) und Richtung des aus der Plasmaquelle 50 austretenden Plasmastrahls 52 eingestellt werden.

In einer besonderen Ausführungsform kann das Verstellsystem 60 verschiedene Verstelleinrichtungen 61, 62 und 63 umfassen. Durch eine erste Verstelleinrichtung 61, welche einem Substrathalter 21 zugeordnet ist, kann zumindest eine eindimensionale Bewegung in X-Koordinatenrichtung X oder in Y-Koordinatenrichtung Y oder in Z-Koordinatenrichtung Z durchführbar sein. Durch eine zweite Verstelleinrichtung 62, welche mit der Plasmaquelle 20 verbunden ist, kann eine dreidimensionale Bewegung in X-Koordinatenrichtung X, Y-Koordinatenrichtung Y und Z-Koordinatenrichtung Z ausgeführt werden. Durch eine dritte Verstelleinrichtung 63, welche mit der Positioniereinheit 40 verbunden ist, kann zumindest eine dreidimensionale Bewegung in X-Koordinatenrichtung X, Y-Koordinatenrichtung Y und Z-Koordinatenrichtung Z durchgeführt werden. Die Verstelleinrichtungen 61, 62 und 63 sind zur Ausführung von beliebigen Translationen und Kippbewegungen bezüglich der X-Koordinatenrichtung X, Y-Koordinatenrichtung Y und Z-Koordinatenrichtung Z ausgelegt.

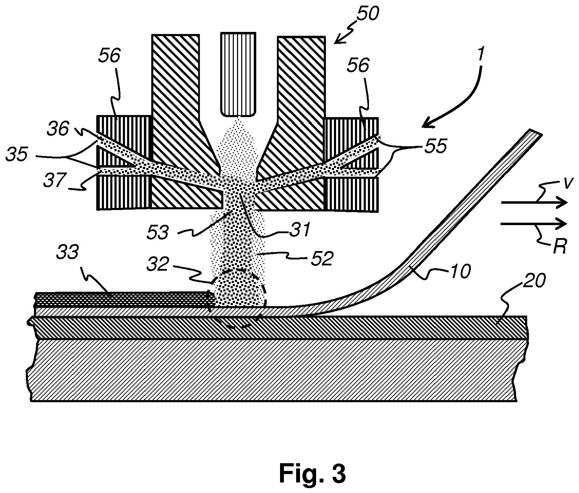

**Figur 3** zeigt eine schematische Schnittansicht der in Figur 1 gezeigten Ausführungsform der erfindungsgemäßen Vorrichtung 1 mit Dosiereinheiten 56. Insbesondere kann jede Zuleitung 55 eine Dosiereinheit 56 umfassen. Eine erfindungsgemäße Dosiereinheit 56 ist zur abstimmbaren Dosierung eines Trägergases 35 und jeweils mindestens einer Materialkomponente 36 und 37 des Verbindungsmaterials 30 ausgelegt. Mit ihr kann die Zufuhr einer Materialkomponente 36 und 37 ganz unterbunden sowie beliebige Mischungsverhältnisse zweier Materialkomponenten 36 und 37 und beliebige Mischungsgradienten entlang des Verbindungspfades 34 (siehe Figur 12) eingestellt werden.

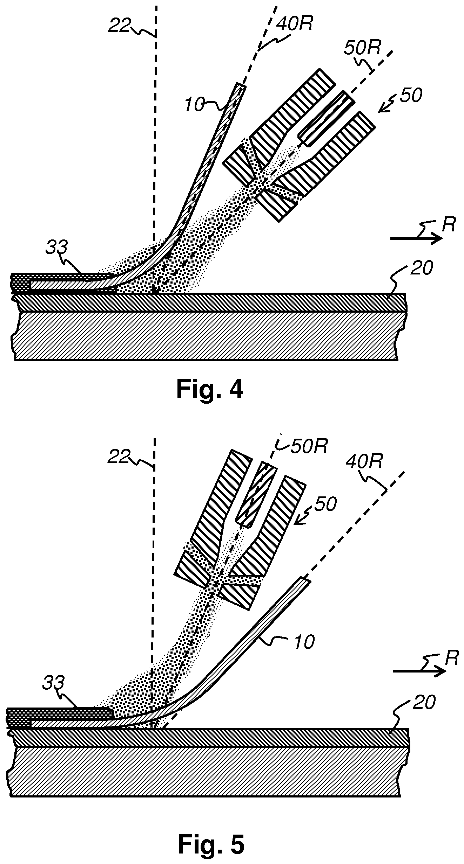

**Figur 4** zeigt eine schematische Seitenansicht der Zuordnung einer Plasmaquelle 50 zum zu verbindenden Leiter 10 und dem Substrat 20. Dabei sind Plasmaquelle 50 und Positioniereinheit 40 jeweils entlang einer gegen die Normale 22 des Substrats 20 verkippten Achse 50R bzw. 40R auf den zu verbindenden Abschnitt 32 gerichtet. Die Verkippung erfolgt dabei in Vorschubrichtung R. Im vorliegenden Ausführungsbeispiel ist die verkippte Achse 50R der Plasmaquelle 50 stärker geneigt als die verkippte Achse 40R der Positioniereinheit 40. Durch diese Konfiguration entsteht eine Ablagerung zwischen Substrat 20 und Leiter 10. Das Substrat 20 und der Leiter 10 haben in diesem Fall keinen direkten stofflichen Kontakt.

**Figur 5** zeigt eine schematische Seitenansicht einer weiteren Möglichkeit der Zuordnung einer Plasmaquelle 50 zum zu verbindenden Leiter 10 und dem Substrat 20. Der Unterschied zur Ausführungsform in Figur 4 ist, dass die verkippte Achse 40R der Positioniereinheit 40 stärker geneigt ist als die verkippte Achse 50R der Plasmaquelle 50. Bei der hier beschriebenen Ausführungsform ist die Dicke 33d der Ablagerung 33 an der Oberseite des Leiters 10 größer als bei der Ausführungsform in Figur 4. Die "Oberseite" ist dabei bezüglich der Normalen 22 des Substrats 20 definiert.

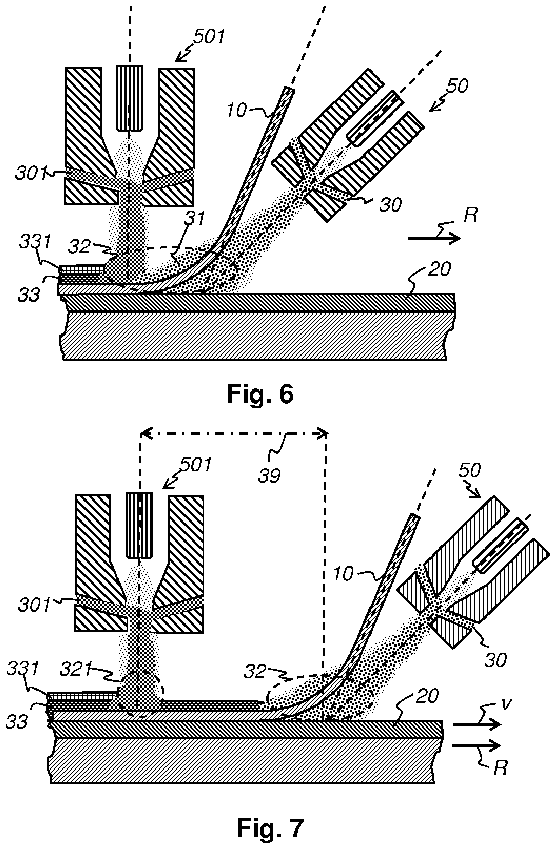

**Figur 6** zeigt eine schematische Seitenansicht der Zuordnung von zwei Plasmaquellen 50 und 501 zum zu verbindenden Leiter 10 und dem Substrat 20. Eine weitere Plasmaquelle 501 ist auf den zu verbindenden Abschnitt 32 gerichtet. Die weitere Plasmaquelle 501 ist der Plasmaquelle 50 in Vorschubrichtung R vorgeordnet. Dadurch wird auf die Ablagerung 33, die aus noch nicht erstarrtem, aktiviertem Verbindungsmaterial 31 besteht, eine weitere Ablagerung 331 aus einem weiteren Verbindungsmaterial 301 abgeschieden. Da sowohl das Verbindungsmaterial 30 als auch das weitere Verbindungsmaterial 301 im aktivierten Zustand in Kontakt sind, wird die Diffusion der beiden Verbindungsmaterialien 30 und 301 ineinander und somit die Haftung zwischen den Ablagerungen 33 und 331 verstärkt. Allerdings erhöht sich der gesamte Wärmeeintrag pro Fläche und Zeit, da beide Plasmaquellen 50 und 501 zur gleichen Zeit oder mit geringem Zeitversatz auf den gleichen zu verbindenden Abschnitt 32 gerichtet sind. Die Auswahl der Verbindungsmaterialien 30 und 301 kann vom Benutzer je nach Anforderung getroffen werden. Die Verbindungsmaterialien 30 und 301 können sich z.B. in allen Materialkomponenten 36 und 37 unterscheiden, sie können zum Teil übereinstimmen oder auch in allen Materialkomponenten 36 und 37 übereinstimmen.

**Figur 7** eine schematische Seitenansicht einer weiteren Möglichkeit der Zuordnung von zwei Plasmaquellen 50 und 501 zum zu verbindenden Leiter 10 und dem Substrat 20. Im Unterschied zur in Figur 6 dargestellten Ausführungsform ist die weitere Plasmaquelle 501 auf einen weiteren zu verbindenden Abschnitt 321 gerichtet, welcher dem zu verbindenden Abschnitt 32 um einen Abstand 39 beabstandet ist. Der Wärmeeintrag aus der Plasmaquelle 50 kann dadurch zumindest teilweise abgeführt werden, wobei der Abstand 39 und Vorschubgeschwindigkeit v die Abkühlzeit und somit die erreichte Temperatur am weiteren zu verbindenden Abschnitt 321 beeinflussen. Es sinkt somit die lokale thermische Belastung des Substrats 20 pro Fläche und Zeit. Abstand 39 und Vorschubgeschwindigkeit v können über ein Verstellsystem 60 so eingestellt werden, dass das Verbindungsmaterial 30 der Ablagerung 33 im Zeitpunkt der Abscheidung der weiteren Ablagerung 331 bereits erstarrt ist. Dies ist z.B. vorteilhaft der Herstellung einer weiteren Ablagerung 331 aus einem elektrisch isolierenden weiteren Verbindungsmaterial 301 auf einer Ablagerung 33 aus einem leitfähigen Verbindungsmaterial 30.

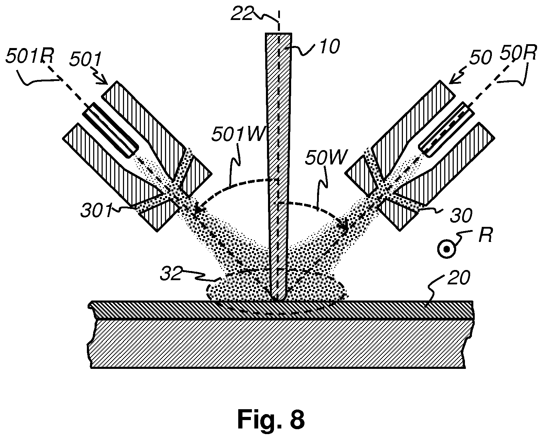

**Figur 8** zeigt eine schematische Ansicht der Zuordnung von zwei Plasmaquellen 50 und 501 zum zu verbindenden Leiter 10 und dem Substrat 20, wobei die Vorschubrichtung R aus der Zeichenebene zeigt. Der Leiter 10 wird von der Positioniereinheit 40 (hier nicht dargestellt) im zu verbindenden Abschnitt 32 auf dem Substrat 20 positioniert. Die beiden Plasmaquellen 50 und 501 sind derart in Bezug auf den zu verbindenden Leiter 10 bzw. das Substrat 29 angeordnet, dass die Kippachsen 50R und 501R der Plasmaquellen 50 und 501 jeweils bezüglich der Normalen 22 des Substrats 20 am Ort des zu verbindenden Abschnitts 32 jeweils um einen Winkel 50W bzw. 501W verkippt sind. Durch eine solche Verkippung werden durch den Leiter 10 möglicherweise verursachte Abschattungen für die Plasmaquellen 50 und 501 auf dem Substrat 20 verringert oder vermieden. Alternativ kann der Leiter 10 von der Positioniereinheit 40 im zu verbindenden Abschnitt 32 in einem geringen Abstand (nicht dargestellt) über dem Substrat 20 positioniert werden. Dadurch können Leiter 10 und Substrat 20 ohne direkten Kontakt untereinander über eine Ablagerung (nicht dargestellt) verbunden werden.

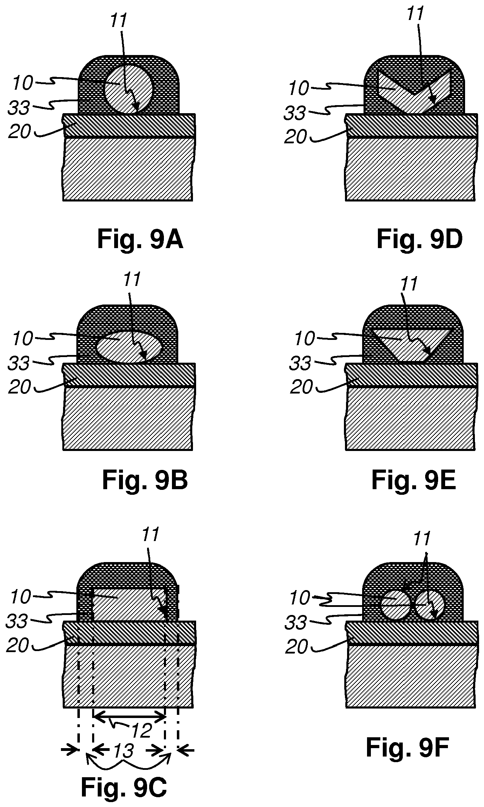

**Figur 9A bis 9F** zeigen verschiedene Querschnittsformen 11 von Leitern 10, die mittels der Ablagerung 33 stoffschlüssig mit dem Substrat 20 verbunden sind. Die Querschnittform 11 des Leiters 10 kann beispielsweise rund (siehe Figur 9A), elliptisch (siehe Figur 9B), rechteckig (siehe Figur 9C), v-förmig (siehe Figur 9D), oder trapezförmig (siehe Figur 9E) sein. Ferner kann der Leiter 10 aus einer Vielzahl von Leiterdrähten oder aus einem Drahtgeflecht bestehen. Figur 9F zeigt exemplarisch einen Leiter 10 aus zwei Leiterdrähten mit jeweils einer runden Querschnittsform 11. Der Leiter 10 kann auch eine Ablagerung 33 sein. Je geringer die Auflagefläche 12 des Leiters 10 auf dem Substrat 20 gegenüber seiner Querschnittsform 11 ist, desto größer wird die Haftungsfläche 13 zwischen Verbindungsmaterial 10 und zum Substrat 20, und desto stabiler wird die Haftung zwischen Ablagerung 33 und Substrat 20.

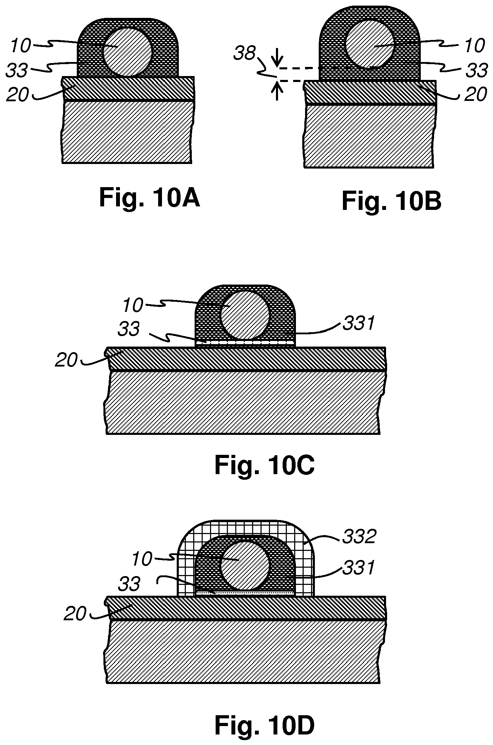

**Figur 10A bis 10D** zeigen Querschnittsprofile von verschiedenen Typen der Ablagerung 33 und der Verbindung des Leiters 10 und des Substrats 20. Figur 10A zeigt einen direkt auf dem Substrat 20 aufliegenden und ansonsten in der Ablagerung 33 eingebetteten Leiter 10. Figur 10B zeigt einen Leiter 10, der vollständig von der Ablagerung 33 umgeben bzw. ummantelt ist. Figur 10C zeigt einen Leiter 10, der auf der Ablagerung 33 aufliegt. Ablagerung 33 und Leiter 10 sind von einer weiteren Ablagerung 331 überdeckt. Die Ablagerung kann hierbei als Haftvermittlungsschicht (z.B. eine Busbar einer Solarzelle) oder als elektrische Isolierschicht fungieren. In Figur 10D wird die in Figur 10C gezeigte Struktur von einer zusätzlichen Ablagerung 332 überdeckt, die als Schutzschicht vor mechanischer oder chemischer Schädigung, als Antireaktionsschicht, als Wärmeableitungsschicht ausgestaltet sein kann.

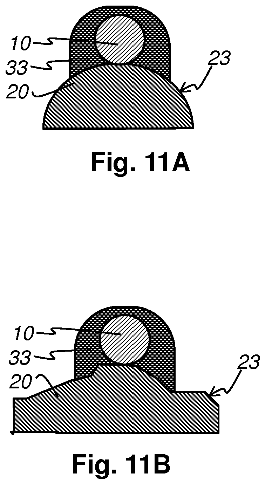

**Figur 11A und 11B** zeigen Querschnittansichten von Substraten 20 verschiedener Topologien 23 und der resultierenden stoffschlüssigen Verbindung von Leiter 10 und Substrat 20. Figur 11A und Figur 11B zeigen ein Substrat 20 mit runder bzw. beliebig ausgeformter Topologie 23.

**Figur 12** zeigt eine schematische Draufsicht auf eine erfindungsgemäß hergestellte Ablagerung 33 zwischen Substrat 20 und Leiter 10 entlang eines Verbindungspfades 34. Insbesondere werden durch eine Relativbewegung der Plasmaquelle 50 gegenüber der Positioniereinheit 40 abseits des Verbindungspfades 34 zusätzliche Ablagerungen 332 abgeschieden und stoffschlüssig mit der Ablagerung 33 bzw. dem Substrat 20 verbunden.

**Figur 13** zeigt eine schematische Draufsicht auf weitere Typen von erfindungsgemäß hergestellten Verbindungen zwischen Substrat 20 und Leiter 10. Erstens kann eine Ablagerung 33 entlang des Verbindungspfades 34 aus einem einzigen Verbindungsmaterial 30 bestehen. Zweitens kann an den Enden 341 und 342 der Ablagerung 33 eine weitere Ablagerung 331 die Verbindung zwischen Leiter 10 und Substrat 20 mechanisch verstärken. Beispielsweise kann das Substrat 20 eine Solarzelle, der Leiter 10 ein Kontaktdraht und die Ablagerung 33 Busbar und eine leitfähige Lotschicht in einem sein. Wenn das Substrat 20 z.B. eine Solarzelle 200 ist, so ist es besonders vorteilhaft, die weitere Lotschicht 331 aus einem Isolator wie Quarzglas (SiO₂) herzustellen, um einen elektrischen Kurzschluss der Sonnenseite 203 mit der gegenpoligen Schattenseite 202 der Solarzelle 200 zu vermeiden. Drittens können entlang des Verbindungspfades 34 eine Ablagerung 33 aus einem Verbindungsmaterial 30 abgeschieden werden, die über eine Übergangszone 333 stoffschlüssig und mit einem stetigem Mischungsgradienten in eine weitere Ablagerung 331 aus einem weiteren Verbindungsmaterial 301 übergeht. Durch ein erfindungsgemäßes System und unter Ausführung der erfindungsgemäßen Verfahren können z.B. alle in Figur 13 dargestellten Verbindungen auf einem Substrat 20 parallel hergestellt werden.

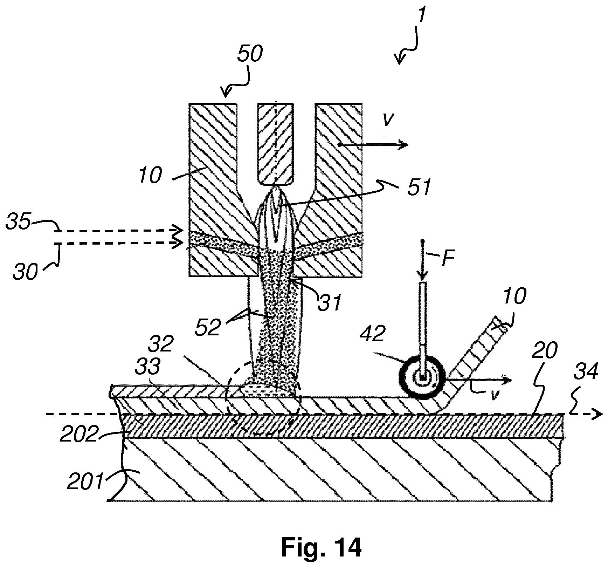

**Figur 14** zeigt eine schematische Ansicht einer weiteren Ausführungsform der Vorrichtung 1 aus Figur 1 mit einer Ausgestaltung der Positioniereinheit 40. Die Positioniereinheit 40 ist als eine Umlenkrolle 42 ausgebildet. Die Umlenkrolle 42 führt den Leiter 10 entlang des Verbindungspfades 32. Zur Vermeidung mechanischer Schädigungen kann sie bezüglich des Substrats 20 kontaktfrei ausgestaltet sein.

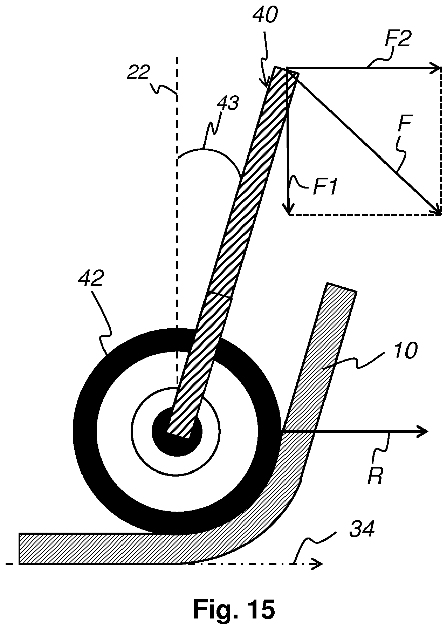

**Figur 15** zeigt eine Detailansicht der in Figur 14 gezeigten Umlenkrolle 42, die in Vorschubrichtung R um einen Winkel 43 gegen die Normale 22 des Substrats 20 geneigt ist. Die Umlenkrolle 42 führt einen drahtförmigen Leiter 10 und kann eine Kraft F auf den Leiter 10 ausüben. Die Kraft F setzt sich aus einer Druckkraft F1 entlang der Normalen 22 des Substrats 20 und/oder einer Zugkraft F2 entlang des Verbindungspfades 34 zusammensetzen.

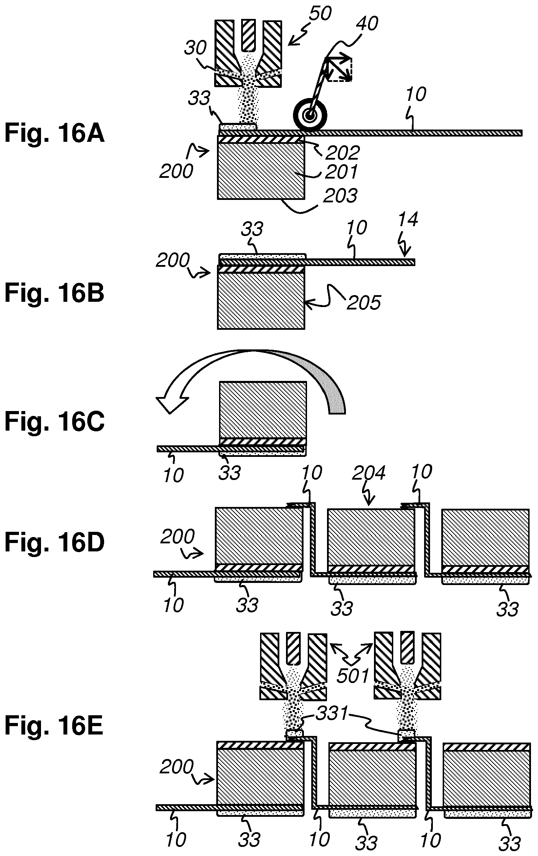

**Figur 16A bis 16E** zeigen schematische Darstellungen des Produktionsprozesses eines Solarzellenmoduls unter Verwendung des erfindungsgemäßen Verfahrens bzw. der erfindungsgemäßen Vorrichtung 1. Das Substrat 20 ist hierbei eine Solarzelle 200. Eine Solarzelle 200 umfasst typischerweise einen Wafer mit pn-Übergang 201. Der photoelektrisch aktive pn-Übergang zeigt zur der Sonnenseite 203 der Solarzelle 200. Ihre Schattenseite 202 trägt gewöhnlich eine voll- oder teilflächige Metallisierung aus z.B. Aluminium (AI) oder schwer lötbaren, stark Al-haltigen Siebdruckpasten. In einem ersten Verfahrensschritt erfolgt das Aufbringen von Busbar und Leiter 10 auf der Schattenseite 202 der Solarzelle 200. Falls der drahtförmige Leiter 10 nicht bereits vorgeschnitten ist, wird der Leiter 10 geschnitten, wobei ein Überstand 14 auf zumindest einer Seite 205 der Solarzelle 200 verbleibt. In einem weiteren Schritten folgt das Drehen und Anordnen mehrerer Solarzellen 200 derart, dass der Überstand 14 des Leiters 10 einer Solarzelle 200 auf der Sonnenseite 203 einer benachbarten Solarzelle 204 aufliegt. Schließlich erfolgt das Anlöten des Überstand 14 des Leiters 10 der Solarzelle 200 auf der auf der Sonnenseite 203 der benachbarten Solarzelle 204. Dadurch entsteht ein elektrisch in Reihe geschalteter Solarzellenstring bzw. ein Solarzellenmodul.

Ein erfindungsgemäßes System und die erfindungsgemäßen Verfahren eignen sich insbesondere zur parallelen oder konsekutiven Ausführung der Schritte des Aufbringens von Busbar und Leiter 10 auf einer Solarzelle 200 und des Anlötens des Leiters 10 auf einer benachbarten Solarzelle 204.

Insbesondere hat die Ablagerung 33, die den Leiter 10 und das Substrat 20 stoffschlüssig verbindet, die Funktionen sowohl einer herkömmlichen Busbar als auch einer herkömmlichen Lotschicht inne. Zudem kann der Plasmastrahl 52 und im Plasmastrahl 52 enthaltene Aktivstoffe die Solarzelle 200 vorwärmen und/oder im zu verbindenden Abschnitt 32 physikalisch und/oder chemisch aktivieren. Entsprechend erfolgt die Herstellung der Ablagerung 33 in einem Schritt. Ferner entfällt unter Verwendung der Erfindung ein Repositionierungsschritt des Leiters 10 auf der Busbar.

Durch Abstimmung der Prozessparameter (z.B. der Vorschubgeschwindigkeit v, der Ausgestaltung der Düse 53, des Abstands von Düse 53 zu Substrat 20, den Massenströmen von Plasmagas 54, Trägergas 35 und z.B. pulverförmigen Verbindungsmaterial 30 etc.) können die Geometrie, Charakteristik und Eigenschaften der Plasmabeschichtungen optimiert werden. Beispielsweise kann durch geeignete Einstellung der Vorschubgeschwindigkeit v und entsprechender Abstimmung der anderen Prozessparameter die thermische Belastungszeit auf einem zu beschichtenden Abschnitt 32 von 1,0 x 3,5-5,5 mm² auf ca. 20 ms und entlang des gesamtem Verbindungspfades 34 auf einer typischen Solarzelle 200 unter 1,0 s reduziert werden. Mit Taktzeiten unter 1.0 s ist das erfindungsgemäße Verfahren um circa eine Größenordnung schneller als z.B. das in der europäischen Patenanmeldung EP 1 748 495 A1 offenbarte Verfahren. Ferner kann erfindungsgemäß auf eine Vorwärmung oder Vorbehandlung der Solarzelle 200 verzichtet werden. Zur Reduzierung der thermischen Belastung kann erfindungsgemäß je nach Materialkombination die Substrattemperatur auf unter 100 °C reduziert werden. Hinzu kommt, dass die thermische Belastung lokal erfolgt.

Durch die geringe mechanische, elektrostatische und thermische Belastung, die das erfindungsgemäße Verfahren ausübt, können Solarzellen 200 aus immer dünnerem und dadurch bruchempfindlicherem Wafermaterial hergestellt werden. Ebenso ist es möglich die Solarzellen 200 aus halbleitenden Folien mit pn-Übergang auf z.B. organischer Basis herzustellen.

Die Erfindung wurde unter Bezugnahme auf eine bevorzugte Ausführungsform beschrieben. Es ist für einen Fachmann jedoch selbstverständlich, dass Änderungen und Abwandlungen der Erfindung durchgeführt werden können, ohne dabei den Schutzbereich der nachstehenden Ansprüche zu verlassen.

**Bezugszeichenliste:**

| | |
|---|---|
| 1 | Vorrichtung |
| | |
| 10 | Leiter |
| 11 | Querschnittsform |
| 12 | Auflagefläche |
| 13 | Haftungsfläche |
| 14 | Überstand |
| | |
| 20 | Substrat |
| 21 | Substrathalter |
| 22 | Normale |
| 23 | Topologie |
| 200 | Solarzelle |
| 201 | Wafer mit pn-Übergang |
| 202 | Schattenseite |
| 203 | Sonnenseite |
| 204 | benachbarte Solarzelle |
| 205 | Seite |
| | |
| 30 | Verbindungsmaterial |
| 31 | aktiviertes Verbindungsmaterial |
| 32 | zu verbindender Abschnitt |
| 33 | Ablagerung |
| 33d | Dicke |
| 34 | Verbindungspfad |
| 35 | Trägergas |
| 36 | erste Materialkomponente |
| 37 | zweite Materialkomponente |
| 38 | Zwischenschicht |
| 39 | Abstand |
| 301 | weiteres Verbindungsmaterial |
| 321 | weiterer zu verbindender Abschnitt |
| 331 | weitere Ablagerung |
| 332 | zusätzliche Ablagerung |
| 333 | Übergangszone |
| 341, 342 | Enden |
| | |
| 40 | Positioniereinheit |
| 40R | verkippte Achse |
| 41 | Wärmesenke |
| 42 | Umlenkrolle |
| | |
| 50 | Plasmaquelle |
| 50R | verkippte Achse |
| 50W, 501W | Winkel |
| 51 | Plasma |
| 52 | Plasmastrahl |
| 53 | Düse |
| 54 | Plasmagas |
| 55 | Zuleitung |
| 56 | Dosiereinheit |
| 57 | Düsenaufsatz |
| 58 | Plasmagas |
| 59 | Elektrode |
| 500 | Gehäuse |
| 501 | weitere Plasmaquelle |
| 501R | verkippte Achse |
| 571 | erste Düsenöffnung |
| 571 | zweite Düsenöffnung |
| | |
| 60 | Verstellsystem |
| 61 | erste Verstelleinrichtung |
| 62 | zweite Verstelleinrichtung |
| 63 | dritte Verstelleinrichtung |
| 64 | Verbindung |
| | |
| 71 | Aufbringen von Busbar und Leiter |
| 72 | Zuschneiden des Leiters |
| 73 | Drehen |
| 74 | Anordnen |
| 75 | Anlöten |
| | |
| F | Kraft |
| F1 | Druckkraft |
| F2 | Zugkraft |
| | |
| R | Vorschubrichtung |
| v | Vorschubgeschwindigkeit |
| | |
| X | X-Koordinatenrichtung |
| Y | Y-Koordinatenrichtung |
| Z | Z-Koordinatenrichtung |

## Patentansprüche

1. Verfahren zum Verbinden von Leitern (10) mit Substraten (20), umfassend die folgenden Schritte:
• Positionieren eines Leiters (10) in einem zu verbindenden Abschnitt (32) auf einem Substrat (20) durch eine Positioniereinheit (40);
• Erzeugen eines Plasmas (51) in mindestens einer Plasmaquelle (50) und Zuführen von Verbindungsmaterial (30) in das Plasma (51), wobei das Verbindungsmaterial (30) durch zumindest teilweises Ändern seiner Beschaffenheit aktiviert wird;
• Gerichtetes Ausleiten eines Plasmastrahls (52) und darin enthaltenem aktivierten Verbindungsmaterial (31) durch mindestens eine Düse (53) der mindestens einen Plasmaquelle (50) auf den zu verbindenden Abschnitt (32); und
• Abscheiden von aktiviertem Verbindungsmaterial (31) auf dem zu verbindenden Abschnitt (32), so dass eine Ablagerung (33) aus Verbindungsmaterial (30) den Leiter (10) mit dem Substrat (20) stoffschlüssig verbindet;
**dadurch gekennzeichnet, dass**
mindestens eine Wärmesenke (41) am zu verbindenden Abschnitt (32) vorgesehen ist oder thermisch leitfähig mit dem Leiter (10) über die Positioniereinheit (40) verbunden wird, so dass Wärmeenergie aus dem Leiter (10) abgeführt wird.

2. Verfahren nach Anspruch 1, wobei eine Relativbewegung zwischen dem zu verbindenden Abschnitt (32) entlang eines Verbindungspfades (34) auf dem Substrat (20) und der mindestens einen Plasmaquelle (50) ausgeführt wird.

3. Verfahren nach Anspruch 1 oder 2, wobei das Verbindungsmaterial (30), welches einer Plasmaquelle (50) zugeführt wird, aus mehreren Materialkomponenten (36, 37) zusammengesetzt ist.

4. Verfahren nach Anspruch 3, wobei die Materialkomponenten (36, 37) und deren Mischungsverhältnis in der Ablagerung (33) entlang des Verbindungspfades (34) variiert werden.

5. Verfahren nach den vorangegangenen Ansprüchen, wobei der Plasmaquelle (50) in einer Vorschubrichtung (R) mindestens eine weitere Plasmaquelle (501) nachgeordnet ist, mit welcher eine weitere Ablagerung (331) aus einem weiteren Verbindungsmaterial (301) zusammen mit der Ablagerung (33) oder auf der Ablagerung (33) zumindest teilflächig aufgetragen wird.

6. Verfahren nach einem der vorangegangenen Ansprüche, wobei über die Positioniereinheit (40) eine Druckkraft (F1) auf den Leiter (10) gegen das Substrat (20) und/oder eine Zugkraft (F2) auf den Leiter (10) in Richtung der Vorschubrichtung (R) eingestellt wird.

7. Verfahren nach einem der vorangegangenen Ansprüche, wobei das Verbindungsmaterial (30) mindestens einen Pulvertyp umfasst, der mit einem Trägergas (35) oder einer Trägerflüssigkeit gemischt und homogenisiert wird.

8. Vorrichtung (1) zum Verbinden von Leitern (10) mit Substraten (20)
• mit einer Positioniereinheit (40) zur Positionierung eines Leiters (10) in einem zu verbindendem Abschnitt (32);
• mit mindestens einer Plasmaquelle (50) zur Erzeugung eines Plasmas (51);
• mit mindestens einer Zuleitung (55) zur Zuführung eines Verbindungsmaterials (30) in das Plasma (51) der Plasmaquelle (50);
**dadurch gekennzeichnet**
• **dass** die Plasmaquelle (50) mindestens eine Düse (53) ausgebildet hat, durch die ein Plasmastrahl (52) mit darin enthaltenem aktivierten Verbindungsmaterial (31) auf den zu verbindenden Abschnitt (32) richtbar ist, so dass eine Ablagerung (33) ausbildbar ist, die den Leiter (10) und das Substrat (20) stoffschlüssig verbindet; und
• **dass** dem Leiter (10) mindestens eine Wärmesenke (41) am zu verbindenden Abschnitt (32) oder an der Positioniereinheit (40) zugeordnet ist.

9. Vorrichtung nach Anspruch 8, wobei mindestens ein Verstellsystem (60) vorgesehen ist, das zum Erzeugen einer dreidimensionalen Relativbewegung des Substrats (20) gegen die mindestens eine Plasmaquelle (50) und die Positioniereinheit (40) entlang eines Verbindungspfades (34) ausgebildet ist.

10. Vorrichtung (1) nach einem der Ansprüche 8 oder 9, wobei jede der mindestens einen Plasmaquelle (50) mindestens eine Zuleitung (55) zur Zufuhr von Verbindungsmaterial (30) in das Plasma (51) aufweist.

11. Vorrichtung (1) nach Anspruch 10, wobei jede Zuleitung (55) eine Dosiereinheit (56) umfasst, welche zur abstimmbaren Dosierung eines Trägergases (35) und jeweils mindestens einer Materialkomponente (36, 37) des Verbindungsmaterials (30) ausgelegt ist.

12. Vorrichtung (1) nach einem der Ansprüche 8 bis 11, wobei der mindestens einen Plasmaquelle (50) in einer Vorschubrichtung (R) mindestens eine weitere Plasmaquelle (501) vor- und/oder nachgeordnet ist.

13. System, umfassend mehrere Vorrichtungen (1) nach einem der Ansprüche 8 bis 12 zur parallelen Bearbeitung eines oder mehrerer Substrate (20).

## Claims

1. Method of connecting conductors (10) to substrates (20) comprising the following steps:
• positioning a conductor (10) in a section (32) to be connected on a substrate (20) by a positioning unit (40);
• generating a plasma (51) in at least one plasma source (50) and supplying connecting material (30) into the plasma (51), wherein the connecting material (30) is activated by at least partially changing its nature;
• directional discharging a plasma jet (52) and activated connecting material (31) contained therein through at least one nozzle (53) of the at least one plasma source (50) on the section (32) to be connected; and
• depositing of activated connecting material (31) on the section (32) to be connected, so that a deposit (33) of connecting material (30) connects the conductor (10) with the substrate (20) in a material-locking manner;
**characterized in that**
at least one heat sink (41) is provided on the section (32) to be connected or is thermally conductively connected to the conductor (10) via the positioning unit (40) so that heat energy is dissipated from the conductor (10).

2. Method according to claim 1, wherein a relative movement between the section (32) to be connected along a connection path (34) is excecuted on the substrate (20) and the at least one plasma source (50).

3. Method according to claim 1 or 2, wherein the connecting material (30), which is supplied to a plasma source (50), is composed from a plurality of material components (36, 37).

4. Method according to claim 3, wherein the material components (36, 37) and the mixing ratio thereof can be varied in the deposit (33) along the connection path (34).

5. Method according to any one of the preceding claims, wherein at least one further plasma source (501), by means of which a further deposition (331) of a further connecting material (301) along with the deposit (33) or on the deposit (33) is applied on at least part of the surface, is arranged downstream the plasma source (50) in a feed direction (R).

6. Method according to any one of the preceding claims, wherein a compressive force (F1) is set on the conductor (10) against the substrate (20) and/or a pulling force (F2) is set on the conductor (10) in the direction of the feed direction (R) by means of the positioning unit (40).

7. Method according to any one of the preceding claims, wherein the connecting material (30) comprises at least one powder type which is mixed and homogenized with a carrier gas (35) or a carrier liquid.

8. Device (1) for connecting conductors (10) with substrates (20) comprising
• a positioning unit (40) for positioning a conductor (10) in a section (32) to be connected;
• at least one plasma source (50) for generating a plasma (51);
• at least one feed line (55) for feeding a connecting material (30) into the plasma (51) of the plasma source (50);
**characterized in that**
• the plasma source (50) has formed at least one nozzle (53) through which a plasma jet (52), having activated connecting material (31) contained therein, can be directed onto the section (32) to be connected so that a deposit (33) can be formed which connects the conductor (10) and the substrate (20) in a material-locking manner; and
• at least one heat sink (41) is assigned to the conductor (10) at the section (32) to be connected or at the positioning unit (40).

9. Device according to claim 8, wherein at least one adjustment system (60) is provided which is configured to generate a three-dimensional relative movement of the substrate (20) against the at least one plasma source (50) and the positioning unit (40) along a connecting path (34).

10. Device (1) according to any one of the claims 8 or 9, wherein each of the at least one plasma source (50) has at least one feed line (55) for feeding connecting material (30) into the plasma (51).

11. Device (1) according to claim 10, wherein each feed line (55) comprises a metering unit (56) which is configured for the tunable metering of a carrier gas (35) and in each case at least one material component (36, 37) of the connecting material (30).

12. Device (1) according to any one of the claims 8 to 11, wherein at least one further plasma source (501) is arranged upstream and/or downstream of the at least one plasma source (50) in a feed direction (R).

13. System comprising a plurality of devices (1) according to any one of the claims 8 to 12 for the parallel processing of one or more substrates (20).

## Revendications

1. Procédé de connexion de conducteurs (10) à des substrats (20) comprenant les étapes suivantes:
• le positionnement d'un conducteur (10) dans une partie (32) à connecter sur un substrat (20) par une unité de positionnement (40);
• la génération d'un plasma (51) dans au moins une source de plasma (50) et amener un matériau de connexion (30) dans le plasma (51), dans lequel le matériau de connexion (30) est activé en modifiant au moins partiellement sa nature;
• la décharge directionnelle d'un jet de plasma (52) et d'un matériau de connexion activé (31) contenu dans celui-ci à travers au moins une buse (53) d'au moins une source de plasma (50) sur la partie (32) à connecter; et
• le dépôt d'un matériau de connexion activé (31) sur la partie (32) à connecter, de sorte qu'un dépôt (33) de matériau de connexion (30) relie le conducteur (10) au substrat (20) d'une manière verrouillée en substance;
**caractérisé en ce que**
au moins un dissipateur thermique (41) est prévu sur la partie (32) à connecter ou est connecté de manière conductible thermiquement au conducteur (10) par l'intermédiaire de l'unité de positionnement (40) de sorte que l'énergie thermique est extraite du conducteur (10).

2. Procédé selon la revendication 1, dans lequel un mouvement relatif est effectué entre la partie (32) à connecter le long d'un trajet de connexion (34) sur le substrat (20) et la au moins une source de plasma (50).

3. Procédé selon la revendication 1 ou 2, dans lequel le matériau de connexion (30) qui est amené dans une source de plasma (50) est composé d'une pluralité de composants de matériaux (36, 37).

4. Procédé selon la revendication 3, dans lequel les composants de matériaux (36, 37) et leur rapport de mélange dans le dépôt (33) sont modifiés le long du trajet de connexion (34).

5. Procédé selon l'une des revendications précédentes, dans lequel au moins une autre source de plasma (501), avec laquelle un dépôt supplémentaire (331) d'un autre matériau de connexion (301) est appliqué avec le dépôt (33) ou sur le dépôt (33) au moins partiellement sur une zone, est disposée en aval de la source de plasma (50) dans une direction d'alimentation (R).

6. Procédé selon l'une des revendications précédentes dans lequel une force de compression (F1) sur le conducteur (10) contre le substrat (20) et/ou une force de traction (F2) sur le conducteur (10) dans la direction d'alimentation (R) est réglée par l'unité de positionnement (40).

7. Procédé selon l'une des revendications précédentes, dans lequel le matériau de connexion (30) comprend au moins un type de poudre qui est mélangé et homogénéisé avec un gaz porteur (35) ou un liquide porteur.

8. Dispositif (1) de connexion des conducteurs (10) avec des substrats (20) comprenant:
• une unité de positionnement (40) pour positionner un conducteur (10) dans une partie (32) à connecter;
• au moins une source de plasma (50) pour générer un plasma (51);
• au moins une conduite d'alimentation (55) pour alimenter un matériau de connexion (30) dans le plasma (51) de la source de plasma (50);
**caractérisé en ce que**
• la source de plasma (50) a formé au moins une buse (53) à travers laquelle un jet de plasma (52) avec un matériau de connexion activé (31) contenu dans celui-ci peut être dirigé sur la partie (32) à connecter, de sorte qu'un dépôt (33) peut être formé qui relie le conducteur (10) et le substrat (20) d'une manière verrouillée en substance; et
• au moins un dissipateur thermique (41) est affecté au conducteur (10) sur la partie (32) à connecter ou sur l'unité de positionnement (40).

9. Dispositif selon la revendication 8, dans lequel il est prévu au moins un système de réglage (60) qui est conçu pour générer un mouvement relatif tridimensionnel du substrat (20) contre la au moins une source de plasma (50) et l'unité de positionnement (40) selon un trajet de connexion (34).

10. Dispositif (1) selon l'une quelconque des revendications 8 ou 9, dans lequel chacune des au moins une source de plasma (50) comporte au moins une conduite d'alimentation (55) pour amener un matériau de connexion (30) dans le plasma (51).

11. Dispositif (1) selon la revendication 10, dans lequel chaque conduite d'alimentation (55) comprend une unité de dosage (56) conçue pour le dosage accordable d'un gaz porteur (35) et à chaque fois au moins un composant de matériaux (36, 37) du matériau de connexion (30).

12. Dispositif (1) selon l'une des revendications 8 à 11, dans lequel au moins une autre source de plasma (501) est disposée en amont et/ou en aval de la au moins une source de plasma (50) dans une direction d'alimentation (R).

13. Système comprenant plusieurs dispositifs (1) selon l'une des revendications 8 à 12 pour le traitement parallèle d'un ou plusieurs substrats.
